# EUROPEAN PATENT SPECIFICATION

(11) **EP 0 995 287 B1**
(45) Date of publication and mention of the grant of the patent: **09.07.2003**
(21) Application number: 98914336.7
(22) Date of filing: 27.03.1998
(51) Int. Cl.: H04L 1/24

(54) **DEVICE AND METHOD FOR DETERMINING CHARACTERISTICS OF A DIGITAL SUBSCRIBER LINE**
VORRICHTUNG UND VERFAHREN ZUR BESTIMMUNG DER EIGENSCHAFTEN EINER DIGITALEN TEILNEHMERLEITUNG
DISPOSITIF ET PROCEDE DE DETERMINATION DES CARACTERISTIQUES D'UNE LIGNE D'ABONNE NUMERIQUE

(30) Priority: 07.07.1997 US 888766
(43) Date of publication of application: 26.04.2000
(73) Proprietor: Legerity, Inc., Austin, TX 78744-1812 (US)
(72) Inventor: BELL, Russell, W., Austin, TX 78750 (US)
(74) Representative: Brookes Batchellor
(86) International application number: US9806111
(87) International publication number: WO99003221

(56) References cited:
- WO-A-95/31865
- US-A- 4 611 101

## Description

### Field of the Invention

The present invention is directed to a device and method for determining characteristics of an existing wire network, and more particular, a device and method for characterizing the suitability of the wire network for use with various data transmission technologies.

### Background

Over the last few years, the demand for high speed communication applications has exploded. The Internet, for example, has grown at astronomical rates over the past several years. A significant number of new Internet subscribers connect from a home or small office using a personal computer (PC). One draw back typically associated with home and small office Internet connection, is the relatively slow speeds at which data is transferred between the Internet service provider and the subscriber's PC.

The relatively low data transfer speeds associated with home, PC-based Internet connections are primarily the result of the low-bandwidth capabilities of the wiring used to connect the PC to the Internet service provider. More particularly, a data "bottleneck" is introduced by the copper wiring used to connect the central office (CO) of the telephone company to the home.

Until recently, few options have been available to the home or small business user to increase the data transfer bandwidth. Users could purchase expensive, dedicated T-1 or frame relay lines which have relatively high bandwidths (e.g., 1.5 Mbps). The cost of such lines, however, are prohibitive for most home uses. Accordingly, most telecommuters, mobile users, and small office/home office (SOHO) users must use a lower bandwidth data transfer technology such as 28.8 kbps modems, 56 kbps asynchronous modem connections, integrated services digital networks (ISDN), and the like.

One suggestion to increase the bandwidth for home uses is to provide high bandwidth lines (e.g., optical cabling) directly to the home. Such an approach is very expensive since extremely large amounts of new optical cabling or wiring must be installed. Such an approach also ignores the value of the existing copper infrastructure already in place around the world. The existing copper networks have a undepreciated world-wide value estimated at over 600 billion dollars. There are approximately 700 million existing local copper loops around the world, and over 160 million in the United States. The principle difficulty in exploiting the copper wiring infrastructure is the traditionally low bandwidth data transmission capability of the twisted-pair copper wiring local loop which form the final link between the CO and the home.

Recently, digital subscriber line (xDSL) technologies have been developed to provide high-speed data transmission from the service provider (e.g., the CO) to the customer premise over the existing twisted-pair copper wiring conventionally used for telephone service. Such xDSL technologies leverage modem technology to increase the data transfer bandwidth of the twisted-pair copper wiring. Typically, xDSL modems are provided on the ends of the subscriber line copper wiring to communicate between the CO and the customer's premise. The manner in which the two modems communicate is established by the particular xDSL approach used. Because the existing telephone wire is used, xDSL technologies data signals are typically transferred out-of band with the voice band signals. Because different frequencies are used for the voice band and the data band, voice and data information can be concurrently transferred over the twisted-pair copper line. In a typical xDSL example, voice information may be carried in frequency bands below 4 kHz with data being carried in frequencies above the voice band, typically from 50 kHz to 1 MHz.

While xDSL technologies may be implemented in a number of different forms, each approach typically uses an xDSL model at the customer premise which communicates with an xDSL modem at the CO of the telephone company. At the CO, data transmitted over the subscriber line using xDSL technologies is communicated to Internet or other intranet services, for example, over high-speed wide area network (WAN) services, such as frame relay or ATM services. Different competing forms of digital subscriber line technologies are collectively designated as xDSL technologies where the "x" represents various one or more letter combinations which are used in front of the "DSL" acronym in order to designate the type of technology being used. Some of the more prevalent xDSL technologies currently being considered include HDSL, ADSL, SDSL and VDSL. To facilitate a better understanding of xDSL technology, a brief discussion of some of the differences between a few examples is set out below.

HDSL (High Data-rate Digital Subscriber Line) has been used as a low-cost substitute for T1 lines in symmetrical business-oriented wide area network (WAN) applications. HDSL typically supports 768 kbps full-duplex communication over a single twisted pair, T-1-speeds over two twisted pairs, and E2 speeds over 3 pairs. SDSL (Single-line Digital Subscriber Line) is well suited for home use or other small subscriber premises and provides T-1 or E1 date transmission speeds over a single twisted-pair copper line. SDSL supports standard voice band data transmissions and T-1/E-1 data band transmission simultaneously over the same line. ADSL (Asymmetric Digital Subscriber Line) exploits asymmetric upstream and downstream data transmission rates to increase the amount of data which may be delivered to the subscribers premise. ADSL allocates the larger portion of the bandwidth to downstream traffic, providing rates ranging from T1 to 9 Mbps downstream and 16 to 640 kbps upstream. ADSL technologies typically use either carrierless amplitude-phase (CAP) modulation or discrete multitone (DMT) modulation techniques. ADSL technology is especially suited for connecting to a customer premise where, as is often the case in Internet applications, a significantly larger portion of data transfers are provided from the service provider to the customer premise than from the customer premise to the service provider.

A number of factors effect the data transmission rates which can be used. For example, the rate depends on the length and gauge of the twisted-pair copper line used for transmission. Table 1 lists exemplary lines widths and downstream data transmission rates using ADSL technology on a typical 24-gauge twisted-pair copper subscriber line.

**TABLE 1**

| **Line Length** | **Down Stream Data Rate** |
|---|---|
| 18,000 feet | 1.544 Mbps (T1) |
| 16,000 feet | 2.048 Mbps (E1) |
| 12,000 feet | 6.312 Mbps (DS2) |
| 9,000 feet | 8.448 Mbps (E2) |

As will be appreciated from the above-description, a number of different technologies may be used to transmit data over existing twisted-pair lines. The various technologies range, for example, from voice band modems having transmission speeds as low as 1,200 bps up to VDSL out-of-band technologies having downstream data transmission speeds from 13 to 52 Mbps. The ability to use the various schemes depends on a number of factors including, for example, the twisted-pair copper wiring length and gauge and overall structure of the wiring. As a result not all technologies can be used on a given digital subscriber line. It is difficult to determine which, if any, data scheme would be appropriate for a particular subscriber. Moreover, the characteristics of the line may change with time. The present invention provides the ability to determine the electrical characteristics of the copper wire on which various data transmission technology may be used and to determine the suitability of the copper line for various applications.

WO-A-9 531 865 discloses an apparatus and method for testing a telephone line between a customers network termination equipment and an exchange in accordance with the pre-characteristic part of claim 1 and claim 10 hereafter.

### Summary of the Invention

The present invention provides a method for determining the suitability of a copper line, used for transmitting voice band signals and having one or more user devices coupled thereto for transmitting signals on the copper line, for use in transmitting data signals out-of-band with the voice band signals, the method comprising:
applying to a section of the copper line a test signal having a known relationship to a particular out-of-band data transmission scheme;
   *the method being characterised by;*
monitoring a response of the same section of the copper line, as influenced by the one or more user devices, to the test signal; and
determining the suitability of the copper line for data transmission using the particular out-of-band data transmission scheme based on the monitored response of the copper line.

The present invention also provides a device for determining the suitability of a copper line, used for transmitting voice band signals and having one or more user devices coupled thereto for transmitting signals on the copper line, for use in transmitting data signals out-of-band with the voice band signals, the device comprising:
a signal generator for coupling to a section of the copper line, the signal generator being adapted to provide a test signal to the copper subscriber line, the test signal having a known relationship to a particular out-of-band data transmission scheme;
   *the device being characterised by;*
a monitoring circuit for coupling to the same section of the copper line to monitor a response of the copper line, as influenced by the one or more user devices, to the test signal; and
a processing unit coupled to the monitoring circuit to receive the monitored response of the copper line to the test signal and to output an indication of the suitability of the copper line for use in transmitting data signals using the particular out-of-band data transmission scheme.

The above summary of the present invention is not intended to describe each illustrated embodiment or every implementation of the present invention. The figures and the detailed description which follow more particularly exemplify these embodiments.

### Brief Description of the Drawings

The invention may be more completely understood in consideration of the following detailed description of various embodiments of the invention in connection with the accompanying drawings, in which:
Figure 1 depicts a system for determining the suitability of a copper network for particular data transmission scheme in accordance with an embodiment of the invention;
Figure 2 illustrates a typical wiring scheme which may be seen by a test unit in accordance with an embodiment of the invention;
Figure 3 illustrates a flowchart of one particular test process in accordance with an embodiment of the invention;
Figure 4 illustrates a splitter/filter arrangement in accordance with one embodiment of the invention;
Figure 5 illustrates a testing scheme in accordance with another embodiment of the present invention;
Figure 6 illustrates a flowchart of a characterization process in accordance with an embodiment of the invention; and
Figure 7 illustrates another embodiment of the present invention.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention as defined by the appended claims.

### Detailed Description of the Various Embodiments

The present invention is believed to be applicable to a variety of environments where it is desirable to determine the suitability of an existing wiring network for out-of-band data transmission schemes. The invention is particularly suited for detecting the suitability of existing subscriber line twisted-pair copper wiring for use as a transmission medium for xDSL data transmission technologies. While the present invention is not so limited, an appreciation of various aspects of the invention is best gained through a discussion of various application examples operating in such environments.

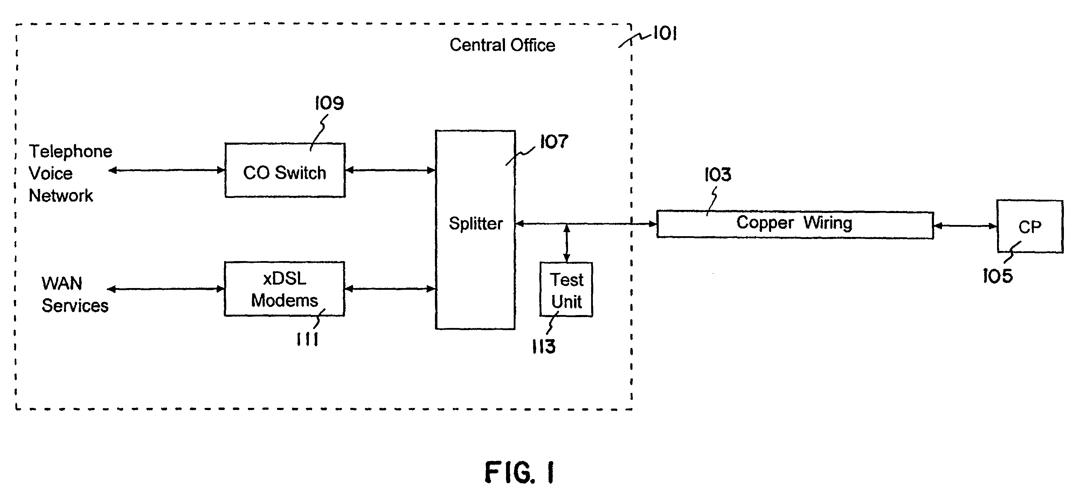

One particular embodiment of the invention is illustrated in Figure 1. In this particular example, the central office (CO) 101 of a telephone company is connected via a copper wiring network 103 to a customer premise 105. The CO 101 has the capability of providing standard telephone services as well as high-rate data transmissions using xDSL technologies. The CO 101 includes a splitter 107 to divide signals received from the customer premise 105 into voice and data applications. The splitter 107 permits subscribers using xDSL data transmission technology to talk on the phone at the same time they are connected to the Internet, for example.

The splitter 107 supplies voice band signals to a standard CO switch 109 which connects the voice band signals to an appropriate destination using a standard public switched telephone network (PSTN), for example. The splitter 107 provides data band signals received from a subscriber to a bank of xDSL modems 111. The type of xDSL modem used in the CO corresponds to the type of xDSL modem used by a subscriber. For example, if a subscriber utilizes an ADSL modem to communicate with the CO, an ADSL modem is also provided in the xDSL modem bank 111. The data band signals from the subscriber are transmitted to the appropriate ADSL modem at the CO 101. In this manner, a communication path is established over the subscriber line between two xDSL modems.

In the embodiment of Figure 1, the CO 101 also includes a test unit 113. The test unit 113 is used to test the suitability of an existing copper subscriber line local loop, which connects the CO 101 to a particular subscriber, for xDSL transmissions. As used herein and described more fully below, copper wiring 103 of subscriber line includes the twisted-pair connecting the subscriber to the CO 101 (which may be as long or longer the 18,000 feet) as well as the twisted pair-copper wiring within the customer premises used to connect various user devices to the CO. The user devices or customer premise equipment (CPE) coupled to the copper wiring 103 may include, for example, telephones, computers, fax machines, and the like as described more fully below.

When both voice and out-of-band data signals are transmitted over the common transmission medium, perhaps simultaneously, consideration must be given to whether the voice band and data band signals will interfere with each other or otherwise influence the ability of the customer premise equipment coupled to the line to properly handle the respective type of data. High frequency out-of-band data signals transmitted to or from a PC, for example, may enter into a telephone connected to the copper wiring 103 causing interference with voice band signals. For example, subscriber equipment such as a telephone unit or other device that plugs into the line may have a non-linear characteristic. It is possible that the non-linearity may cause the modulated out-of-band data signals to be demodulated into signals that enter the voice band signal causing audible noise in the telephone. Similarly, voice band signals and ringing signals associated with a telephone, may interfere with a data stream intended for a PC.

In certain instances, it may be necessary to provide an appropriate filter between the copper wiring and the customer premise equipment to filter out interference from other device. For example, a low-pass filter could be coupled between the copper wiring and a telephone to filter out interference from data signals. Similarly, a high pass filter could be provided between the copper wiring and a PC. The filters could be provided within a splitter arrangement which would receive both voice and data band signals transmitted on the twisted-pair copper wiring and have an output from a low pass filter and from a high pass filter. A more detailed description of filter and splitter arrangements adapted for use in the small office/home office (SOHO) environment is described in commonly assigned copending patent application by the same inventor, entitled "Device and Method for Isolating Voice and Data Signals on a Common Carrier," now granted as US-A-5 930 340.

Not all customer premise equipment may require filtering. For example, certain telephone sets may not require filters since their construction presents a high input impedance to signals in the data band. In such instances, a filter may not be required. Because of the many different types of customer premise equipment which may be connect to the copper wiring, it is difficult to predict how each device may influence the suitability of the copper wiring for a particular out-of-band data transmission scheme. Thus, it is difficult to determine by simply evaluating line lengths and wire gage whether or not a particular data transmission scheme will work, or whether some form of filter or splitter is required.

As noted above, the test unit 113 tests the suitability of the copper wiring for use with various data transmission schemes. The test unit 113 injects various test signals into the copper wiring 103 and monitors the response of the copper wiring to the test signals. For example, the test unit 113 may measure the amount of current drawn by the copper wiring under various conditions representative of the data transfer scheme being tested. The test unit 113 may inject modulated signals at different frequencies and voltage levels and monitor the response of the copper wiring. The signals may be in the out-of-band data frequencies only or may also include voice band frequencies. The test unit 113 can monitor and determine whether or not a particular signal in one band will be demodulated or otherwise cause interference in another band.

In certain instances, the test unit 113 may also account for the actual length of the copper wiring used for the subscriber line as well as other characteristics which may prevent the use of or otherwise reduce the various types of data transmission schemes which may be used. Using the data obtained from the test unit 113, the service provider can determine in advance of actually implementing a particular service whether the copper wiring of a particular subscriber line is suitable for a desired data transmission scheme. The service provider may also use the monitored results to make a determination of whether filters and/or splitters would be required. This allows the service provider to make any necessary adjustments or recommendations when a subscriber requests a particular data service.

The test unit 113 may also be used by the service provider or network operator to periodically monitor for changing conditions in the subscriber's network. For example, a network that is initially suitable for a particular data service, may subsequently become inappropriate in view of changes introduced by the addition of a new telephone, a telephone answering machine, a new computer, or the like. Any of such changes could influence the copper wiring such that a particular data transmission scheme would not work correctly. In response to such an indication, the service provider may dispatch a truck to install filter/splitters or a message could be sent to the subscriber over a more robust channel (perhaps over the same copper at a slower speed instructing the corrected action which should be taken by the subscriber).

The test unit 113 is particularly suited to determine the suitability for transmitting out-of-band data signals over lines used for voice transmissions such as xDSL transmission technologies. If the test unit 113 indicates that the copper wiring is not suitable for use with a particular xDSL service, the information may be used to provide alternatives to the subscriber. For example, the service provider may offer the subscriber a lower data rate service or may offer to install splitters on the customer's premise to improve performance.

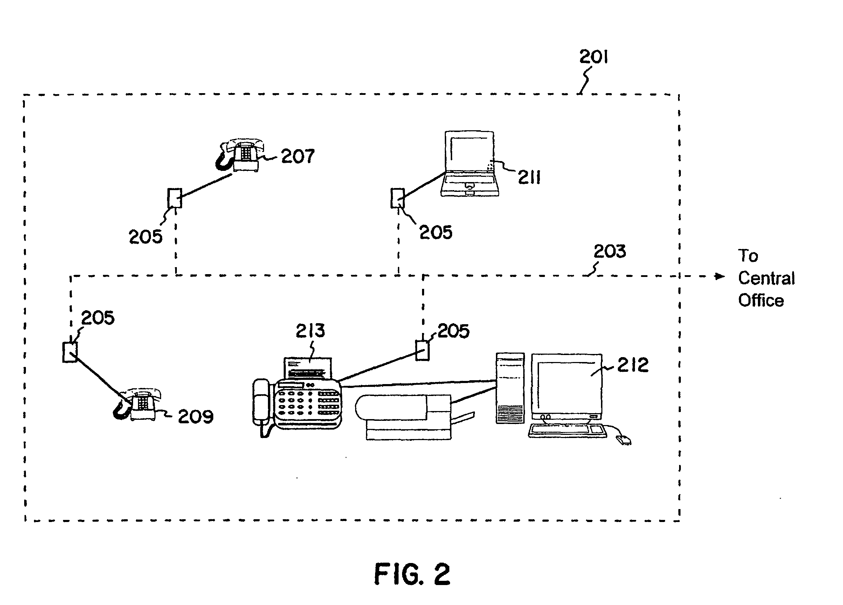

Figure 2 illustrates an example of the portion of the copper wiring which may be located within a customer premises 201. The internal copper wiring 203 includes a number of jacks which couple telephones, computers, fax machines, and other computer peripheral equipment to the internal copper wiring 203. As noted above, the various equipment coupled to the internal copper wiring, such as telephones 207 and 209, computers 211 and 212, and fax machines 213, influence the suitability of the internal copper wiring 203 for use as a transmission medium for a particular data transmission scheme. In accordance with one embodiment of the invention, the service provider can determine from the CO whether a particular scheme may be used for transmission of voice and data.

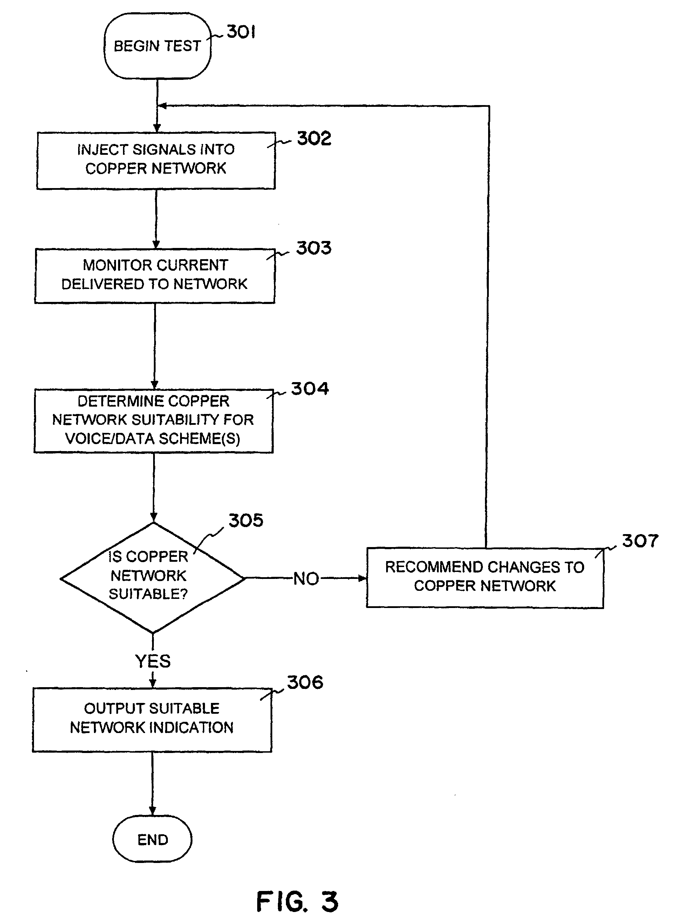

The process of determining the suitability of a subscriber line for voice band and data band transmission scheme will be described more fully in connection with Figure 3. In order to characterize the suitability of a particular copper network formed of, for example, a subscriber line leading to the customer premise and the wiring internal to the premise, the test circuit is coupled to the copper network and the test operation is initiated (step 301). The test unit injects various signals into the copper network (step 302). The signals represent an out-of-band data signal transmission scheme to be tested. The response of the copper network to the injected signals is monitored (step 303) including the influences of various user devices coupled to the copper network. The monitored response of the copper network is used to determine the suitability of the copper network for the tested data transmission scheme (step 304). If the copper network is suitable for the tested scheme (step 305), an indication of the network suitability is output (step 306).

If the copper network is not suitable for the tested data transmission scheme (step 305), changes to the network may be made or recommended (step 307) in effort to make the copper network suitable for a desired data service. Such changes may include the addition of filters or splitters or may indicate that a different type of data service be used. After the changes have been made, the copper network may be tested again (step 302) to determine whether the network is now suitable for the desired transmission scheme. It should be appreciated that more than one data and voice band transmission scheme may be tested. The output produced after the network characterization may include information about a variety of different data transmission schemes and may include a list of schemes for which the network is suitable as well as those for which the network is not suitable.

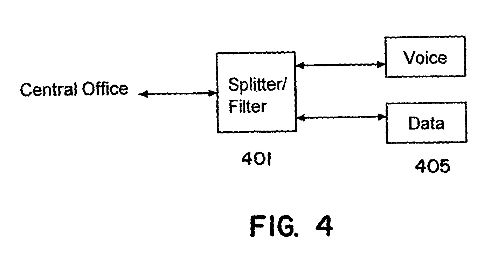

As noted above, one possible solution to improve the suitability of a copper network for a particular data transmission scheme is to provide a splitter/filter which isolates the different types of devices provided on the network. One particular arrangement of a splitter/filter is illustrated in Figure 4. The splitter/filter 401 is coupled to the CO via the copper network. As described above, the splitter/filter 401 includes a voice band port 403 provided in a path including a low pass filter for coupling customer premise equipment used for voice band transmission such as telephones and the like to the copper network. The splitter/filter 401 also has a data band port 405 including a high pass filter which is used to couple data band devices such as computers, peripherals and the like to the copper network.

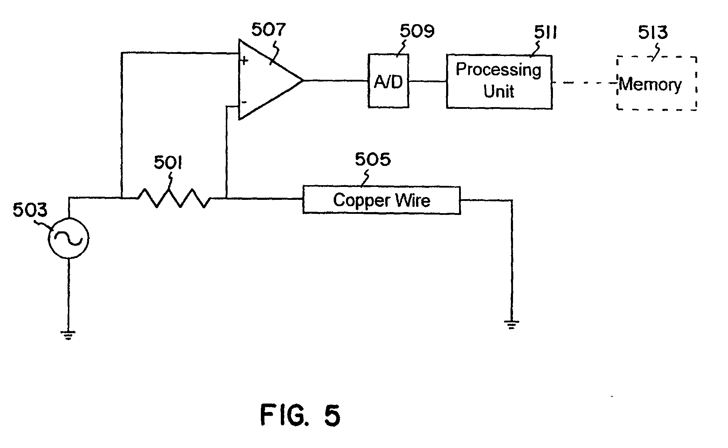

Figure 5 illustrates one particular embodiment of a test circuit that may be used to determine the suitability of a copper wire for use as a transmission medium for various data transmission schemes. In Figure 5, a resistor 501 is coupled between a signal generator 503 and the copper wire 505. The resistor 501 acts as a current-to-voltage transducer which is used to monitor the current from the signal source 503 drawn by copper wiring 505. The current drawn by the copper wire also provides an indication of the manner in which any user devices coupled with the copper wiring may effect the suitability of the wiring for the data transmission scheme. An operational amplifier (op amp) 507 is attached across the resistor 501 and is used to amplify the signal across the resistor 501. The voltage across the resistor 501 is directly proportional to the current which is drawn by the copper wiring 505. By adjusting the voltage level and the frequency of the source signal, one can monitor the current that enters the copper wire network 505 under various conditions which represent various data transmission schemes. The relationship between the input signal and the current drawn by the copper network can be used to characterize the copper wire 505.

The output from the op amp 507 is provided to an analog-to-digital (A/D) converter 509. The A/D converter 509 converts changes in voltage seen across resistor 501 into digital signals which are provided to a processing unit 511. The processing unit 511 use the digital signals to determine how the copper wiring 505 responds to the signals generated by the signal generator 503. In this manner, the processing unit is able to characterize the copper wiring 505 and determine its suitability for use as a transmission medium for the data transmission schemes being tested.

In the above-described embodiment the precise characteristics of the copper network can be obtained by fully analyzing the voltage changes seen be resistor 501. Thus, the suitability for various data transmission schemes can be determined with high precision. Such a suitability characterization process, however, may require extensive calculations, increasing processing overhead and time. In another embodiment of the invention, empirically derived templates are compared with the output from the testing circuit to determine the suitability of the copper network.

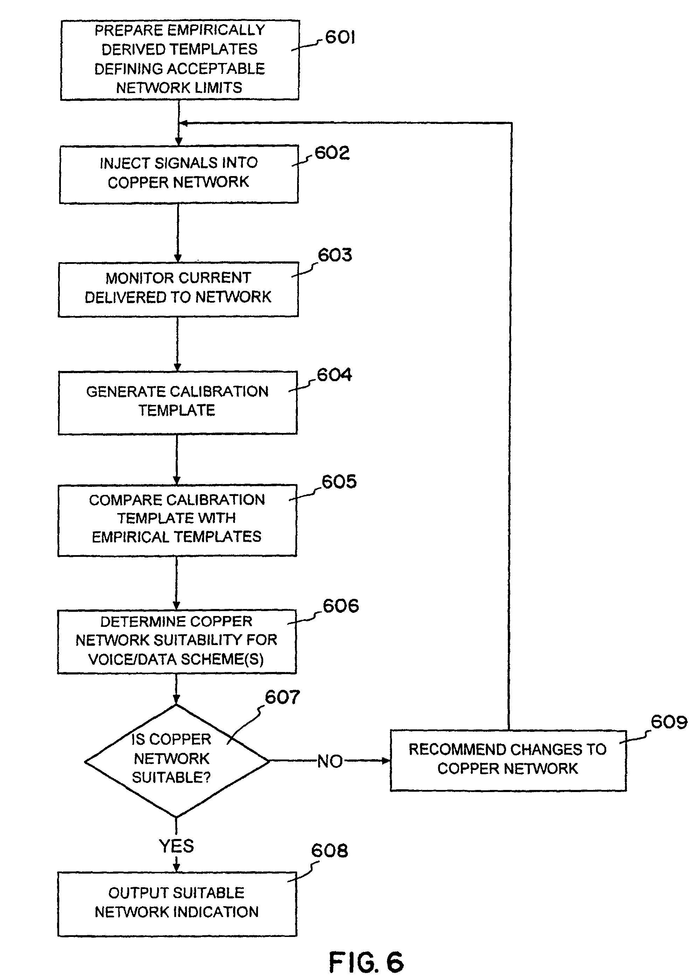

An embodiment of the invention which uses empirical templates is illustrated in Figure 6. In Figure 6, empirically derived templates are determined (step 601) which define the limits of acceptable responses of the copper network to predetermined test signals. Predetermined test signals are injected onto the copper network being tested (step 602) while monitoring the current delivered to the copper network (step 603). The response of the network to the predetermined test signals is used to generate a calibration template (step 604) which characterizes the response of the network to the predetermined test signals. The calibration template is compared with the empirically derived templates (step 605) and the suitability of the network is determined by examining whether the calibration template is within the limits defined by the empirical template (step 607). It will be appreciated that the empirical templates define the limits for a response of the copper network to the predetermined test signals which are acceptable for a network to be used with a data scheme being tested.

If the network is suitable (step 607), an indication is provided of what types of data transmission schemes are acceptable for the particular copper network (step 608). If the copper network is not suitable (step 607), recommendations may be made to change the copper network to improve its response to the test (step 609). After changes have been made, a new calibration template may be derived and compared with the empirically derived templates to determine whether the network now has suitable characteristics for a particular data transmission scheme (steps 602-607).

In the above examples, the test unit is provided at the CO. It will be appreciated that the test unit may be provided at other locations. For example, the test unit may be provided at the customer's premise and be used primarily to characterize the internal wiring of the customer's premise. The test unit may also be incorporated into a portable test unit used in the field, for example, by a technician. In the field, a test procedure may be run and, when the network is indicated as being unsuitable for a tested scheme, a various user devices may be removed and the test rerun. This procedure may be repeated until the device or devices causing problems are identified. Once identified, appropriate action may be taken such as installation of splitters at those devices, for example.

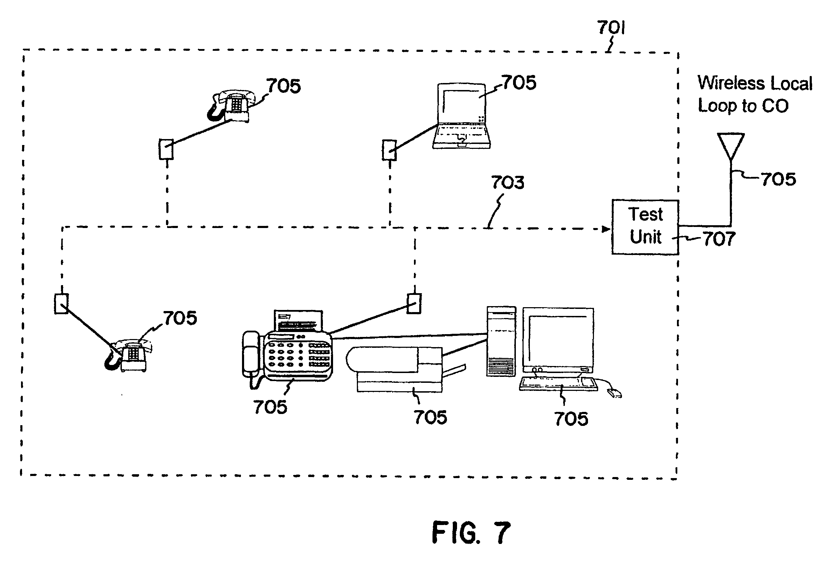

In still another embodiment of the invention, a test unit is provided at the customer's premises and is used to monitor the condition of the local copper wiring. For example, the internal copper telephone wiring of a customers premises, in a SOHO environment for example, may be connected to the CO via a wireless local loop. A test unit may be coupled to the copper wiring as a stand alone device or as a device incorporated into a piece of customer premise equipment. One embodiment of such a system is illustrated in Figure 7. In Figure 7, a copper wire network 703 within the customer premise 701 is coupled to the CO via a wireless local loop 705. A variety of telephonic and computer related equipment is coupled to the copper wire network.

A test unit 707 is also coupled to the wired network and is used to test the suitability of the copper network for a particular out-of-band data transmission scheme. For example, it may be desirable to use an xDSL data transmission scheme as a SOHO local area network (LAN) with a wireless local loop transport to the CO. The use of xDSL as a data transmission scheme for a SOHO network is described in commonly assigned copending patent applications by the same inventor, entitled "Active Isolation System and Method for Allowing Local and Remote Data Transfers Across a Common Data Link," now granted as US-A-6 229 818, and entitled "Bandwidth Sharing for Remote and Local Data Transfers Using Multicarrier Modulation Over Common Transmission Medium," now granted as US-A-5 982 784

The test unit 707 may be used to monitor the condition of the customer's copper network. After the customer premise equipment is installed and voice services are delivered, the customer may wish to add an additional data service that operates on top of the voice service. With the test unit in place, the calibration routine may be used to determine if the network is suitable for the voice band and data band transmissions. In one embodiment, the service provider may invoke the calibration routine via the wireless connection and, if the test unit 707 indicates that the circuit is not capable of operating a particular service, may provide alternatives such as a lower data rate services or the installation of splitters within the customer's premise.

It is also possible for the test unit 707 to operate in conjunction with a SOHO based LAN that operates over the existing copper network. A PC, for example, using a specialized xDSL modem may be coupled to the local wire network and be provided with the ability to perform calibration measurements to determine if the copper network is suitable for supporting data and voice band transmissions without additional splitters or other modifications. In this manner, PCs within the SOHO environment may be networked together using the existing copper infrastructure while allowing simultaneous voice operation without interference. This type of system is more fully described in the above reference co-pending patent applications.

In the above embodiment where the existing copper infrastructure is used to construct a SOHO network, calibration in accordance with the present invention may be integrated into the SOHO modem in order to actively monitor the characteristics of the copper network. In such an embodiment, the SOHO modem may alter the modulation scheme (for example, slow the data rate down) to avoid the demodulation of signals that would appear in the voice band. Alternatively, the SOHO modem may inform the user that the circuit characteristics are not suitable for further operation without the addition of splitters.

As noted above, the present invention is applicable to a number of different apparatus and methods for determining the suitability of a wiring network for data transmission. Accordingly, the present invention should not be considered limited to the particular examples described above, but rather should be understood to cover all aspects of the invention as fairly set out in the attached claims. Various modifications, equivalent processes as well as numerous communication devices to which the present invention will be applicable will be readily apparent to those of skill in the art upon review of the present specification. The claims are intended to cover such modifications and devices.

## Claims

1. A method for determining the suitability of a copper line, used for transmitting voice band signals and having one or more user devices coupled thereto for transmitting signals on the copper line, for use in transmitting data signals out-of-band with the voice band signals, the method comprising:
applying to a section of the copper line (103) a test signal having a known relationship to a particular out-of-band data transmission scheme;
*the method being **characterised by**;*
monitoring a response of the same section of the copper line, as influenced by the one or more user devices (109,111), to the test signal; and
determining the suitability of the copper line for data transmission using the particular out-of-band data transmission scheme based on the monitored response of the copper line.

2. A method as recited in claim 1, wherein the particular out-of-band data transmission scheme comprises an digital subscriber line (xDSL) transmission scheme.

3. A method as recited in claim 1, wherein the one or more user devices include at least one telephone and at least one computer, and further comprising determining a need for a filter at a location of at least one of the telephone and the computer to separate voice band signals and out-of-band data signals transmitted on the copper line.

4. A method as recited in claim 1, wherein the copper line includes a copper network within a subscriber's premise used to provide telephone service to the subscriber, and, monitoring within the subscriber's premises a response of the copper line, as influenced by the one or more user devices, to the test signal.

5. A method as recited in claim 1, wherein determining the suitability of the copper line includes a determination whether any of the one or more user devises has a non-linear characteristic.

6. A method as recited in claim 1, wherein applying the test signal comprises injecting a modulated signal on the line at a frequency corresponding to the particular out-of-band data transmission scheme, and wherein monitoring the response of the copper line includes determining whether the modulated signal at the frequency corresponding to the particular out-of-band data transmission scheme is demodulated.

7. A method as recited in claim 1 or 6, wherein determining the suitability of the copper line includes comparing the monitored response of the copper line with an empirically derived template defining a suitable response limit for the copper line.

8. A device for determining the suitability of a copper line, used for transmitting voice band signals and having one or more user devices coupled thereto for transmitting signals on the copper line (103), for use in transmitting data signals out-of-band with the voice band signals, the device (113) comprising:
a signal generator for coupling to a section of the copper line, the signal generator being adapted to provide a test signal to the copper subscriber line, the test signal having a known relationship to a particular out-of-band data transmission scheme;
*the device being **characterised by**;*
a monitoring circuit for coupling to the same section of the copper line to monitor a response of the copper line, as influenced by the one or more user devices, to the test signal; and
a processing unit (511) coupled to the monitoring circuit to receive the monitored response of the copper line to the test signal and to output an indication of the suitability of the copper line for use in transmitting data signals using the particular out-of-band data transmission scheme.

9. A device as recited in claim 8, wherein the copper line includes a copper network within a subscriber's premise used to provide telephone service to the subscriber.

10. A device as recited in claim 8, further comprising a memory arrangement coupled to the processing unit for storing an empirically derived template defining a limit for a suitable response of the copper line to the test signals for the particular out-of-band data transmission scheme, and wherein the processor compares the monitored response of the copper line with the empirically derived template and outputs an indication that the copper line is suitable for the particular out-of-band data transmission scheme when the monitored response is within the limit defined by the empirically derived template.

## Patentansprüche

1. Verfahren, um eine Kupferleitung, die zum Übertragen von Sprachband-Signalen verwendet wird und mit der eine oder mehrere Benutzervorrichtungen zur Ausgabe von Signalen auf der Kupferleitung verbunden sind, auf ihre Eignung zum Übertragen außerhalb des Bands der Sprachband-Signale liegender Datensignale zu prüfen, mit den folgenden Schritten:
Anlegen eines Testsignals, das ein bekanntes Verhältnis zu einem bestimmten außerhalb des Bands liegenden Datenübertragungsschema hat, an einen Abschnitt der Kupferleitung (103);
*wobei das Verfahren **gekennzeichnet ist durch**:*
Überwachen der Reaktion des dem Einfluss der einen oder mehreren Benutzervorrichtungen (109,111) unterliegenden gleichen Abschnitts der Kupferleitung auf das Testsignal; und
Prüfen der Eignung der Kupferleitung für die Datenübertragung unter Verwendung des bestimmten außerhalb des Bands liegenden Datenübertragungsschemas auf der Basis der überwachten Reaktion der Kupferleitung.

2. Verfahren nach Anspruch 1, bei dem das bestimmte außerhalb des Bands liegende Datenübertragungsschema ein Digital-Teilnehmerleitungs-(xDSL-) Übertragungsschema aufweist.

3. Verfahren nach Anspruch 1, bei dem die eine oder mehreren Vorrichtungen mindestens ein Telefon und mindestens einen Computer aufweisen, ferner mit dem Schritt des Prüfens auf die Notwendigkeit eines Filters an einer Stelle an mindestens einem der Telefone und Computer zur Trennung der Sprachbandsignale und der außerhalb des Bands liegenden Signale, die auf der Kupferleitung übertragen werden.

4. Verfahren nach Anspruch 1, bei dem die Kupferleitung ein für den Telefon-Dienst für den Teilnehmer verwendetes Kupferieitungs-Netzwerk innerhalb der Örtlichkeiten eines Teilnehmers aufweist, und bei dem innerhalb der Örtlichkeiten des Teilnehmers die Reaktion der dem Einfluss der einen oder mehreren Benutzervorrichtungen unterliegenden Kupferleitung auf das Testsignal überwacht wird.

5. Verfahren nach Anspruch 1, bei dem die Prüfung auf die Eignung der Kupferleitung die Prüfung enthält, ob eine der einen oder mehreren Benutzer-Vorrichtungen eine nichtlineare Charakteristik aufweist.

6. Verfahren nach Anspruch 1, bei dem das Anlegen des Testsignals das Eintragen eines modulierten Signals in die Leitung mit einer Frequenz umfasst, die dem bestimmten außerhalb des Bands liegenden Datenübertragungsschema entspricht, und bei dem das Überwachen der Reaktion der Kupferleitung das Prüfen umfasst, ob das modulierte Signal mit der dem bestimmten außerhalb des Bands liegenden Datenübertragungsschema entsprechenden Frequenz demoduliert ist.

7. Verfahren nach Anspruch 1 oder 6, bei dem die Prüfung auf die Eignung der Kupferleitung das Vergleichen der überwachten Reaktion der Kupferleitung mit einer empirisch abgeleiteten Schablone umfasst, die einen geeigneten Reaktions-Grenzwert für die Kupferleitung definiert.

8. Vorrichtung, um eine Kupferleitung, die zum Übertragen von Sprachband-Signalen verwendet wird und mit der eine oder mehrere Benutzervorrichtungen zur Ausgabe von Signalen auf der Kupferleitung (103) verbunden sind, auf ihre Eignung zum Übertragen außerhalb des Bands der Sprachband-Signale liegender Datensignale zu prüfen, wobei die Vorrichtung (113) aufweist:
einen zur Verbindung mit einem Abschnitt der Kupferleitung vorgesehenen Signalgenerator, der zum Ausgeben eines Testsignals an die Kupfer-Teilnehmerleitung geeignet ist, wobei das Testsignal ein bekanntes Verhältnis zu einem bestimmten außerhalb des Bands liegenden Datenübertragungsschema hat,
*wobei die Vorrichtung **gekennzeichnet ist durch**:*
eine Überwachungsschaltung zur Verbindung mit dem gleichen Abschnitt der Kupferleitung zwecks Überwachens der Reaktion des dem Einfluss der einen oder mehreren Benutzervorrichtungen unterliegenden gleichen Abschnitts der Kupferleitung auf das Testsignal; und
eine Verarbeitungseinheit (511), die mit der Überwachungsschaltung verbunden ist, um die überwachte Reaktion der Kupferleitung auf das Testsignal zu empfangen und einen Hinweis auf die Eignung der Kupferleitung für die Übertragung von Datensignalen unter Verwendung des bestimmten außerhalb des Bands liegenden Datenübertragungsschemas auszugeben.

9. Vorrichtung nach Anspruch 8, bei der die Kupferleitung ein Kupferleitungs-Netzwerk innerhalb der Örtlichkeiten eines Teilnehmers aufweist, das für den Telefon-Dienst für den Teilnehmer verwendet wird.

10. Vorrichtung nach Anspruch 8, ferner mit einer Speicheranordnung, die mit der Verarbeitungseinheit verbunden ist, um eine empirisch abgeleitete Schablone zu speichern, die einen Grenzwert für eine für das bestimmte außerhalb des Bands liegende Datenübertragungsschema geeignete Reaktion der Kupferleitung auf die Testsignale definiert, und wobei der Prozessor die überwachte Reaktion der Kupferleitung mit der empirisch abgeleiteten Schablone vergleicht und einen Hinweis auf die Eignung der Kupferleitung für das bestimmte außerhalb des Bands liegende Datenübertragungsschema ausgibt, wenn die überwachte Reaktion innerhalb des durch die empirisch abgeleitete Schablone definierten Grenzwerts liegt.

## Revendications

1. Procédé pour déterminer l'applicabilité d'une ligne de cuivre, utilisée pour émettre des signaux de la bande vocale et auxquels sont couplés un ou plusieurs dispositifs utilisateurs pour émettre des signaux sur la ligne de cuivre, pour une utilisation dans l'émission de signaux de données hors bande avec les signaux de la bande vocale, le procédé comportant les étapes consistant à :
- appliquer, à une section de la ligne de cuivre (103), un signal d'essai ayant une relation connue avec un schéma d'émission de données hors bande particulier ;
*le procédé étant **caractérisé par** :*
- le contrôle d'une réponse de la même section de la ligne de cuivre, influencé par un ou plusieurs dispositifs utilisateurs (109, 111), au signal d'essai ; et
- la détermination de l'applicabilité de la ligne de cuivre pour l'émission de données en utilisant le schéma d'émission de données hors bande particulier basé sur la réponse contrôlée de la ligne de cuivre.

2. Procédé selon la revendication 1, dans lequel le schéma d'émission de données hors bande particulier comprend un schéma d'émission de ligne de rattachement numérique (xDSL).

3. Procédé selon la revendication 1, dans lequel un ou plusieurs dispositifs utilisateurs incluent au moins un téléphone et au moins un ordinateur, et comportant de plus une étape consistant à déterminer un besoin pour un filtre positionné au moins sur le téléphone et sur l'ordinateur pour séparer les signaux de la bande vocale et les signaux de données hors bande émis sur la ligne de cuivre.

4. Procédé selon la revendication 1, dans lequel la ligne de cuivre inclut un réseau de cuivre dans les locaux d'un abonné utilisé pour fournir un service téléphonique à l'abonné, et, le contrôle dans les locaux dudit abonné d'une réponse de la ligne de cuivre, influencé par un ou plusieurs dispositifs utilisateurs, au signal d'essai.

5. Procédé selon la revendication 1, dans lequel la détermination de l'applicabilité de la ligne de cuivre inclut une détermination pour savoir si un ou plusieurs dispositifs utilisateurs possèdent ou non une caractéristique non linéaire.

6. Procédé selon la revendication 1, dans lequel l'application du signal d'essai comporte les étapes consistant à injecter un signal modulé sur la ligne à une fréquence correspondant au schéma d'émission de données hors bande particulier, et dans lequel le contrôle de la réponse de la ligne de cuivre inclut une étape consistant à déterminer si le signal modulé à la fréquence correspondant au schéma d'émission de données hors bande particulier est démodulé ou pas.

7. Procédé selon la revendication 1 ou 6, dans lequel la détermination de l'applicabilité de la ligne de cuivre inclut la comparaison de la réponse contrôlée de la ligne de cuivre avec un modèle empiriquement dérivé définissant une limite de réponse appropriée pour la ligne de cuivre.

8. Dispositif pour déterminer l'applicabilité d'une ligne de cuivre, utilisé pour émettre des signaux de la bande vocale et auxquels sont couplés un ou plusieurs dispositifs utilisateurs pour émettre des signaux sur la ligne de cuivre (103), pour une utilisation dans l'émission de signaux de données hors bande avec les signaux de la bande vocale, le procédé (113) comprenant :
- un générateur de signaux pour un couplage à une section de la ligne de cuivre, le générateur de signaux étant adapté pour appliquer un signal d'essai à la ligne de rattachement de cuivre, le signal d'essai ayant une relation connue avec un schéma d'émission de données hors bande particulier ;
le procédé étant **caractérisé par** :
- un circuit de contrôle pour un couplage à la même section de la ligne de cuivre en vue de contrôler une réponse de la ligne de cuivre, influencé par un ou plusieurs dispositifs utilisateurs, au signal d'essai ; et
- une unité centrale (511) couplée au circuit de contrôle pour recevoir la réponse contrôlée de la ligne de cuivre au signal d'essai et pour produire une indication de l'applicabilité de la ligne de cuivre en vue d'une utilisation dans l'émission de signaux de données utilisant le schéma d'émission de données hors bande particulier.

9. Dispositif selon la revendication 8, dans lequel la ligne de cuivre inclut un réseau de cuivre dans les locaux d'un abonné utilisé pour fournir un service téléphonique à l'abonné.

10. Dispositif selon la revendication 8, comprenant de plus une disposition de mémoire couplée à l'unité centrale en vue de mémoriser un modèle empiriquement dérivé définissant une limite pour une réponse appropriée de la ligne de cuivre aux signaux d'essai pour le schéma d'émission de données hors bande particulier, et dans lequel le processeur compare la réponse contrôlée de la ligne de cuivre avec le modèle empiriquement dérivé et produit une indication que la ligne de cuivre est appropriée pour le schéma d'émission de données hors bande particulier quand la réponse contrôlée est à l'intérieur de la limite définie par le modèle empiriquement dérivé.
